# FASCICULE DE BREVET EUROPEEN

(11) **EP 3 375 575 B1**
(45) Date de publication et mention de la délivrance du brevet: **25.12.2019**
(21) Numéro de dépôt: 18161141.9
(22) Date de dépôt: 12.03.2018
(51) Int. Cl.: B25J 9/16, G05B 19/418, G05B 19/408

(54) **PROCÉDÉ DE COMMANDE D'UNE CELLULE DE TRAVAIL AUTOMATISÉE**
STEUERVERFAHREN EINER AUTOMATISIERTEN ARBEITSZELLE
METHOD FOR COMMANDING AN AUTOMATED WORK CELL

(30) Priorité: 13.03.2017 FR 1752013
(43) Date de publication de la demande: 19.09.2018
(73) Titulaire: Staubli Faverges, 74210 Faverges (FR)
(72) Inventeur: CIVETTE, Rémi, 74210 Doussard (FR); JOLY, Luc, 74210 Faverges (FR)
(74) Mandataire: Lavoix

(56) Documents cités:
- EP-A1- 3 112 095
- WO-A1-2011/110278
- WO-A1-2011/141684

## Description

La présente invention concerne un procédé de commande d'une cellule de travail automatisée. L'invention concerne également une cellule de travail automatisée.

Dans le domaine de la robotique industrielle, il est connu d'utiliser une cellule de travail automatisée qui comporte un bras de robot articulé selon plusieurs degrés de liberté.

De façon générale, un robot industriel a pour fonction d'assurer le positionnement et l'orientation d'un outil dans l'espace, en suivant une trajectoire prédéfinie.

Dans de nombreuses applications, la trajectoire que l'on souhaite faire suivre au bras de robot est donnée par des points et des orientations exprimés dans un repère cartésien. C'est notamment le cas lorsque le robot est utilisé pour mettre en œuvre des opérations d'usinage réalisées par un outil porté par le bras de robot.

Lorsque ce type d'application est effectué par une cellule de travail automatisé comportant une centrale de commande en communication avec un contrôleur de robot et que la centrale de commande met en œuvre la génération de trajectoire, la centrale de commande est programmée pour transformer les positions et les orientations de l'outil, exprimées dans un repère cartésien, en des coordonnées ou consignes articulaires, qui correspondent aux divers degrés de liberté du bras de robot.

La centrale de commande applique une transformation cinématique inverse, qui fait appel à un modèle géométrique du bras de robot et à des calculs d'inversion. Typiquement, ce modèle géométrique comporte des paramètres géométriques théoriques, correspondant à une représentation géométrique idéale du bras de robot.

Les calculs d'inversion dépendent du type de bras de robot utilisé ainsi que des caractéristiques géométriques des articulations. Lors de la conception du bras de robot, ces caractéristiques géométriques sont souvent choisies de manière à faciliter les calculs d'inversion ultérieurs, par exemple en choisissant des axes d'articulation parallèles et/ou concourants.

Cependant, en pratique, les bras de robot présentent toujours un écart plus ou moins important par rapport à leur représentation théorique, du fait des variabilités inhérentes à tout processus de fabrication industrielle. Ainsi, les paramètres géométriques réels du bras de robot diffèrent des paramètres géométriques théoriques sur lesquels le modèle est basé.

Si ces différences ne sont pas prises en compte, il existe un risque que, lors du fonctionnement du bras de robot, la trajectoire réellement suivie soit différente de la trajectoire désirée.

Pour y remédier, il existe des procédés connus sous le nom de calibration ou d'étalonnage du bras de robot, qui permettent de déterminer avec exactitude les paramètres géométriques réels du bras (voir par exemple WO2011/141684 A1). Le moyen le plus répandu de décrire la géométrie d'un bras de robot est d'utiliser le formalisme de Denavit-Hartenberg qui permet d'exprimer, à l'aide de quatre paramètres, la position d'un segment de bras de robot par rapport à celui qui le précède. La mise en œuvre du procédé de calibration fournit une mesure de l'ensemble des paramètres de Denavit-Hartenberg qui constituent des paramètres géométriques réels.

Ces paramètres géométriques réels sont introduits uniquement au stade de la transformation inverse entre les coordonnées cartésiennes définissant la trajectoire et les coordonnées articulaires envoyées au contrôleur du bras de robot.

Dans ce cas, les écarts entre les paramètres mesurés et les paramètres théoriques peuvent mener à la perte des caractéristiques géométriques qui permettaient de faciliter le calcul d'inversion. Par exemple, des axes d'articulation théoriquement choisis comme étant parallèles et/ou concourants en vue de faciliter les calculs d'inversion, peuvent en réalité ne pas l'être. Il est alors nécessaire de mettre en œuvre des calculs d'inversion plus complexes qui soient capables de tenir compte de ces écarts.

Le programme de commande de la centrale de commande doit ainsi implémenter, en plus du modèle cinématique propre au bras de robot utilisé, une transformation inverse capable de prendre en compte les paramètres géométriques réels.

Une telle contrainte n'est pas souhaitable dans un contexte industriel, car elle complique l'élaboration des programmes de commande. Les transformations inverses sont particulièrement consommatrices de ressources de calcul. En outre, cela demande l'implémentation dans la centrale de commande de programmes capables de traiter les paramètres géométriques réels du bras de robot issus du procédé de calibration. De plus, comme les paramètres géométriques réels sont variables d'un bras de robot à un autre, le programmeur de la centrale de commande doit veiller à la gestion rigoureuse des paramètres géométriques réels. C'est à ces inconvénients que vise à remédier l'invention, en proposant un procédé de commande d'une cellule de travail automatisée comprenant un bras de robot articulé, dont la programmation est simplifiée et réalisable sans nécessiter de connaissance a priori de paramètres géométriques réels du bras de robot.

A cet effet, l'invention concerne un procédé de commande d'une cellule de travail automatisée, cette cellule de travail comprenant :
- un bras de robot articulé à au moins trois degrés de liberté, ce bras de robot étant pilotable suivant des consignes articulaires et comportant des moteurs adaptés pour manœuvrer des parties du bras de robot;
- une centrale de commande, apte à commander le fonctionnement de la cellule de travail à partir d'ordres de mouvement ;
- un contrôleur de robot, incluant des contrôleurs de moteur pilotant chacun le fonctionnement d'un moteur ;
- un bus de communication entre la centrale de commande et le contrôleur de robot ;
ce procédé de commande comportant des étapes consistant à :
y) calculer, par la centrale de commande, des consignes articulaires nominales à l'aide d'un générateur de trajectoire, à partir des ordres de mouvement ;
z) transmettre, à travers le bus de communication, les consignes articulaires nominales calculées vers une unité de calcul appartenant au contrôleur de robot ;
et des étapes consistant à :
a) calculer, par l'unité de calcul, des consignes cartésiennes correspondant aux consignes articulaires nominales ;
b) calculer, par l'unité de calcul, des consignes articulaires réelles, à partir des consignes cartésiennes en prenant en compte des paramètres géométriques réels du bras de robot ;
c) calculer, pour chaque consigne articulaire nominale et à partir de la consigne articulaire réelle, une valeur de correction de consigne articulaire ;
d) calculer pour chaque consigne articulaire nominale et à partir de la correction de consigne articulaire établie, une consigne articulaire effective, la consigne articulaire effective étant la somme de la consigne articulaire nominale et de la correction de consigne articulaire ;
e) calculer des consignes de commande pour chaque contrôleur de moteur à partir des consignes articulaires effectives calculées ;
f) transmettre les consignes de commande moteur vers chaque contrôleur de moteur pour piloter le moteur correspondant selon la consigne de commande moteur.

Grâce à l'invention, le positionnement et l'orientation du bras de robot sont réalisés de manière exacte sans que la programmation de la centrale de commande en soit compliquée, en calculant des valeurs de correction de consigne articulaire à partir de consignes articulaires nominales issues du programme de commande et à partir de la consigne articulaire réelle élaborée par l'unité de calcul appartenant au contrôleur de robot qui prend en compte les paramètres géométriques réels du bras de robot. Cette consigne articulaire réelle est calculée lors de l'exécution du programme, en fonction des consignes articulaires nominales reçues.

De cette manière, l'élaboration du programme de commande de la centrale de commande ne nécessite pas de connaissance a priori du résultat de la calibration. Les paramètres géométriques réels du bras de robot sont utilisés pour la correction de consigne articulaire de façon transparente lors de l'exécution du programme. En d'autres termes, lors de l'élaboration du programme de commande, il peut être considéré que le bras de robot est un bras de robot parfait, dont les propriétés géométriques sont fidèlement représentées par le modèle théorique. La conception du programme de commande de la cellule de travail est donc grandement simplifiée. De plus, un même programme peut être mis en œuvre sur différentes cellules de travail sans avoir besoin de tenir compte des écarts des bras de robot respectifs par rapport au bras de robot parfait.

Selon des aspects avantageux mais non obligatoires de l'invention, un tel procédé peut incorporer une ou plusieurs des caractéristiques suivantes, prises isolément ou selon toute combinaison techniquement admissible :
- Lors de l'étape c), la valeur de correction de consigne articulaire est choisie égale à zéro si la valeur absolue de la différence entre la consigne articulaire réelle et la consigne articulaire nominale est supérieure à un seuil prédéfini, la valeur de correction de consigne articulaire est choisie égale à la différence entre la consigne articulaire réelle et la consigne articulaire nominale dans le cas contraire.
- Lors de l'étape c), la valeur de correction de consigne articulaire est choisie égale à la différence entre la consigne articulaire réelle et la consigne articulaire nominale.
- Lors de l'étape c) un filtre passe-bas est appliqué par l'unité de calcul, à la valeur de correction de consigne articulaire calculée.
- Le filtre appliqué est un filtre passe-bas à réponse impulsionnelle finie.
- le filtre comporte trois filtres boxcar appliqués en série.
- Le procédé comporte également des étapes consistant à :
   g) transmettre à destination de l'unité de calcul, la position effective du moteur piloté par ce contrôleur ;
   h) calculer, par l'unité de calcul et à partir des positions effectives des moteurs, des positions articulaires effectives du bras de robot ;
   i) calculer, par l'unité de calcul, des positions articulaires nominales du bras de robot, en retranchant à chaque position articulaire effective la valeur de correction de consigne articulaire calculée pour la consigne articulaire nominale correspondante ;
   j) transmettre à la centrale de commande les positions articulaires nominales calculées lors de l'étape i).
- Lors de l'étape y), les ordres de mouvement définissent des positions et des orientations du bras de robot exprimées dans un repère cartésien et la centrale de commande met en œuvre un modèle cinématique inverse théorique en prenant en compte des paramètres géométriques théoriques du bras de robot.
- Lors de l'étape y), les consignes articulaires nominales sont calculées à partir d'un modèle cinématique inverse théorique du bras de robot paramétré par des paramètres géométriques théoriques du bras de robot et lors de l'étape b), les consignes articulaires réelles sont calculées à partir d'un modèle cinématique inverse réel analogue paramétré par des paramètres géométriques réels du bras de robot.

Selon un autre aspect, l'invention concerne une cellule de travail automatisée comprenant :
- un bras de robot articulé à au moins trois degrés de liberté, ce bras de robot étant pilotable suivant des consignes articulaires et comportant des moteurs adaptés pour manœuvrer des parties du bras de robot;
- une centrale de commande, apte à commander le fonctionnement de la cellule de travail à partir d'ordres de mouvement ;
- un contrôleur de robot, incluant des contrôleurs de moteur pilotant chacun le fonctionnement d'un moteur ;
- un bus de communication entre la centrale de commande et le contrôleur de robot ;
la cellule de travail étant programmée pour mettre en œuvre des étapes consistant à :
y) calculer, par la centrale de commande, des consignes articulaires nominales à l'aide d'un générateur de trajectoire, à partir des ordres de mouvement ;
z) transmettre, à travers le bus de communication, les consignes articulaires nominales calculées vers une unité de calcul appartenant au contrôleur de robot ;
et des étapes consistant à :
a) calculer, par l'unité de calcul, des consignes cartésiennes correspondant aux consignes articulaires nominales ;
b) calculer, par l'unité de calcul, des consignes articulaires réelles, à partir des consignes cartésiennes, en prenant en compte des paramètres géométriques réels du bras de robot ;
c) calculer, pour chaque consigne articulaire nominale et à partir de la consigne articulaire réelle, une valeur de correction de consigne articulaire ;
d) calculer, pour chaque consigne articulaire nominale et à partir de la correction de consigne articulaire établie, une consigne articulaire effective, la consigne articulaire effective étant la somme de la consigne articulaire nominale et de la correction de consigne articulaire ;
e) calculer des consignes de commande pour chaque contrôleur de moteur à partir des consignes articulaires effectives calculées ;
f) transmettre les consignes de commande moteur vers chaque contrôleur de moteur pour piloter le moteur correspondant selon la consigne de commande moteur.

De façon optionnelle, lors de l'étape y), les ordres de mouvement définissent des positions et des orientations du bras de robot exprimées dans un repère cartésien et la centrale de commande met en œuvre un modèle cinématique inverse théorique en prenant en compte des paramètres géométriques théoriques du bras de robot.

Lors de l'étape y), les consignes articulaires nominales sont calculées à partir d'un modèle cinématique inverse théorique du bras de robot paramétré par des paramètres géométriques théoriques du bras de robot et lors de l'étape b), les consignes articulaires réelles sont calculées à partir d'un modèle cinématique inverse réel analogue paramétré par des paramètres géométriques réels du bras de robot.

Enfin, selon un aspect avantageux mais non obligatoire de l'invention, une telle cellule de travail peut comporter des mémoires informatiques contenant des instructions informatiques exécutables adaptées pour mettre en œuvre les étapes y), z) et a) à f).

L'invention sera mieux comprise et d'autres avantages de celle-ci apparaitront plus clairement à la lumière de la description qui va suivre d'un procédé de commande conforme à son principe, faite à titre d'exemple non limitatif et en référence aux dessins annexés dans lesquels :
- la figure 1 est une représentation schématique simplifiée d'une cellule de travail automatisée comprenant un bras de robot articulé pour la mise en œuvre d'un procédé conforme à l'invention ;
- la figure 2 est un schéma synoptique représentant le fonctionnement de la cellule de travail de la figure 1 ;
- les figures 3 à 5 sont des ordinogrammes représentant des étapes du procédé de commande selon l'invention de la cellule de travail de la figure 1.

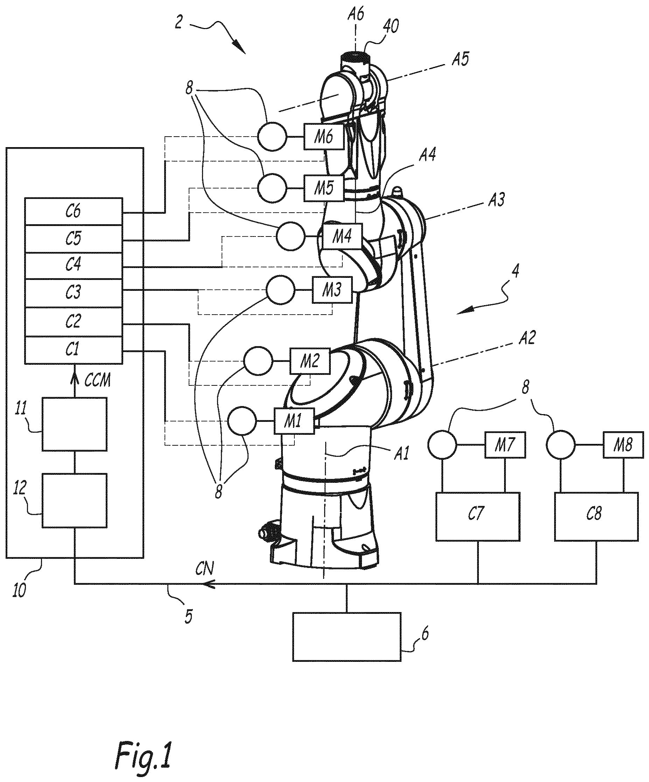

La figure 1 représente une cellule de travail automatisée 2, qui comporte un robot à usage industriel. Le robot comprend un bras de robot 4 articulé selon au moins trois degrés de liberté.

La cellule de travail 2 comporte également une centrale de commande 6, de type contrôleur logique programmable, abrévié PLC, assurant la commande d'un procédé de fonctionnement de la cellule de travail 2.

La centrale de commande 6 comporte notamment un calculateur électronique, tel qu'un microprocesseur ou un microcontrôleur programmable, et comporte également une ou plusieurs mémoires informatiques, non illustrés. Les mémoires sont connectées au calculateur électronique et contiennent des instructions exécutables et notamment des séquences d'action requises pour la réalisation d'un procédé automatisé de fonctionnement de la cellule 2. Ces séquences sont stockées sous la forme de programmes, aussi appelés applications.

Le bras de robot 4 comporte ici plusieurs parties, ou segments, articulés deux à deux autour d'axes d'articulation correspondant chacun à un degré de liberté du bras de robot 4. Le bras de robot 4 comporte également un outil 40 commandable, aussi nommé effecteur. L'outil 40 est par exemple une pince, ou un capteur.

Dans cet exemple, le bras de robot 4 illustré est un bras de robot à six axes, c'est-à-dire à six degrés de liberté. Les articulations sont ici des liaisons pivot. Le bras de robot 4 comprend donc six degrés de liberté en rotation, chacun associé à un des axes d'articulation. Les axes d'articulation sont ici notés A1, A2, A3, A4, A5 et A6.

En variante, le bras de robot 4 peut être différent. Il peut notamment s'agir d'un robot avec un nombre d'axes d'articulation différent, comme par exemple, un robot de type SCARA à quatre axes. Dans le cas du robot SCARA, une partie des degrés de liberté correspond à des mouvements de rotation selon une partie des axes d'articulation, tandis que les autres degrés de liberté correspondent à des mouvements de translation le long d'autres axes d'articulation. En d'autres termes, une partie des segments du bras de robot sont articulés par des liaisons pivot, tandis qu'une autre partie des segments du bras de robot sont articulés au moyen de liaisons glissières.

Selon encore une autre variante, le bras de robot est de type cartésien, les degrés de liberté étant alors associés chacun à un mouvement de translation selon un des axes d'articulation respectifs.

Le bras de robot 4 comprend également des moteurs commandables, qui permettent de manœuvrer les parties du bras de robot 4 les unes par rapport aux autres.

Les moteurs M1, M2, M3, M4 et M6 sont respectivement associés aux axes A1 à A4 et A6. Par exemple, le moteur M2 est adapté pour manœuvrer deux segments du bras de robot 4 l'un par rapport à l'autre selon l'axe articulaire A2, c'est-à-dire ici selon un mouvement de rotation autour de l'axe A2. L'actionnement du moteur M5 entraîne la rotation des axes A5 et A6. Il existe donc un couplage entre les axes A5 et A6 et une rotation de l'axe A5 seul requiert la mise en œuvre des moteurs M5 et M6.

De préférence, les moteurs M1 à M6 sont des moteurs électriques synchrones sans balai. Ils peuvent être couplés à des réducteurs.

Le bras de robot 4 comporte également des capteurs 8, aussi nommés codeurs, chacun associé à un moteur M1 à M6 du bras de robot 4. Chaque capteur 8 est adapté pour mesurer la position angulaire de l'arbre d'un des moteurs M1 à M6 du bras de robot 4.

En variante, dans le cas où le degré de liberté associé à l'axe géométrique correspond à un mouvement de translation, le capteur 8 est un capteur apte à mesurer un déplacement en translation, ou également un codeur si le mouvement de translation est commandé par un moteur rotatif.

En variante, dans le cas où le nombre de degrés de liberté est différent, le nombre de moteurs est adapté en conséquence. Il en va de même pour le nombre de capteurs 8.

La cellule de travail 2 comporte également un contrôleur de robot 10, dont le rôle et de piloter le déplacement du bras de robot 4 en fonction de consignes émises par la centrale de commande 6.

A cet effet, le contrôleur de robot 10 comporte des contrôleurs de moteurs, adaptés pour piloter les moteurs M1 à M6 du bras de robot 4. Chaque contrôleur de moteur est associé à un moteur M1 à M6 pour générer des courants électriques d'alimentation à destination de bornes d'alimentation du moteur correspondant, en fonction de consignes de commande et en fonction d'une régulation assurée à l'aide d'informations de position fournies par le capteur 8 associé au moteur correspondant.

Dans cet exemple, le contrôleur de robot 10 comporte six contrôleurs de moteur, notés C1, C2, C3, C4, C5 et C6. Chaque contrôleur de moteur C1 à C6 est associé, respectivement, à un moteur M1 à M6. Par exemple, le contrôleur de moteur C1 est associé au moteur M1 pour le piloter.

Les contrôleurs de moteur C1 à C6 sont ici identiques.

En variante, les contrôleurs de moteur C1 à C6 peuvent être réalisés différemment. Par exemple, les contrôleurs de moteur C1 à C6 sont remplacés par une même unité de calcul électronique partagée, associée à des étages de puissance chacun associé à un moteur. L'unité de calcul partagée assure la régulation en position, en vitesse et en courant d'alimentation pour tous les moteurs M1 à M6, et fournit aux étages de puissance des commandes de courant calculées, chaque étage de puissance alimentant électriquement le moteur correspondant en conséquence.

Selon une variante, les contrôleurs de moteur C1 à C6 sont mis en œuvre de façon logicielle au moyen de la carte de communication 12 et de l'unité de calcul 11.

Selon une autre variante, les contrôleurs de moteur peuvent être associés simultanément à plusieurs moteurs M1 à M6 de manière à assurer le pilotage de ces moteurs. Par exemple, un même contrôleur de moteur peut être associé à deux moteurs, ou à trois moteurs, ou à six moteurs.

La cellule 2 comporte également un bus de communication 5 qui raccorde la centrale de commande 6 au contrôleur de robot 10.

Le bus de communication 5 est un bus de terrain, adapté pour autoriser un échange de données en temps réel et de façon synchrone entre la centrale de commande 6 et le contrôleur de robot 10.

Notamment, le bus de communication 5 autorise l'échange de données au cours de cycles de communication répétés périodiquement dans le temps avec une fréquence prédéfinie.

Dans cet exemple, sur le bus de communication 5, la centrale de commande 6 est maître et le contrôleur de robot 10 est esclave.

Le bus de communication 5 est ici conforme au protocole de communication « PROFINET ».

En variante, d'autres protocoles et/ou d'autres types de bus de terrain peuvent être utilisés. Par exemple, le bus de communication 5 est du type « Controller Area Network » en langue anglaise, et peut fonctionner selon le protocole de communication « CANOPEN ».

Le contrôleur de robot 10 est équipé d'une unité de calcul 11 et d'une carte de communication 12.

La carte de communication 12 est connectée au bus de communication 5, de sorte à assurer l'interface entre le contrôleur de robot 6 et le bus de communication 5.

L'unité de calcul 11 comporte un microprocesseur adapté pour exécuter des instructions logicielles qui sont fournies à l'unité de calcul 11. L'unité de calcul 11 comporte également des mémoires informatiques, non illustrées.

Dans cet exemple, l'unité de calcul 11 est raccordée à la carte de communication 12 au moyen d'une liaison de données telle qu'un bus interne PCI.

La cellule de travail 2 comporte également des équipements additionnels distincts du bras de robot 4 et destinés à fonctionner de façon conjointe avec le bras de robot 4, ici pour acheminer des pièces mécaniques vers le bras de robot 4 pendant son fonctionnement. Par exemple, ces équipements additionnels sont des tapis roulants.

Ces équipements sont ici manœuvrés par deux moteurs M7 et M8, chacun piloté par un contrôleur de moteur, respectivement noté C7 et C8. Les moteurs M7, M8 et les contrôleurs de moteur C7, C8 sont ici analogues à ceux du bras de robot 4.

Les moteurs M7 et M8 sont également équipés de capteurs 8 analogues aux capteurs du bras de robot 4. Les contrôleurs C7 et C8 sont reliés à la centrale de commande 6 par l'intermédiaire du bus de communication 5, de manière à recevoir des consignes depuis la centrale de commande 6.

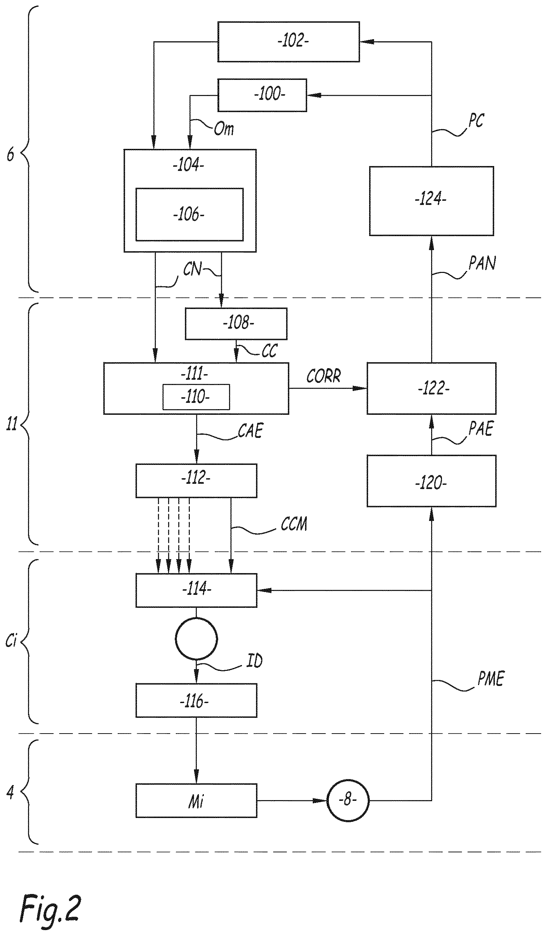

La figure 2 illustre plus en détail le fonctionnement de la centrale de commande 6 et du contrôleur de robot 10 pour piloter le bras de robot 4 et, in fine, pour piloter le déplacement de l'outil 40.

La centrale de commande 6 est ici programmée pour traiter des ordres de mouvement du bras de robot 4 et pour générer, en réponse, des consignes de position articulaires, destinées à être ensuite transmises au contrôleur de robot 10 en vue de piloter le bras de robot 4 en conséquence.

Les ordres de mouvement, notés Om, définissent par des coordonnées cartésiennes une trajectoire que doit suivre le bras de robot 4 ou, plus précisément, que doit suivre un point spécifique du bras de robot 4. Par exemple, ce point spécifique appartient à l'outil 40. Par exemple, les ordres de mouvement Om incluent des points et des orientations définis dans l'espace cartésien.

Les ordres de mouvement Om sont ici exprimés en tant qu'instructions exécutables au sein d'un programme 100. Le programme 100 est enregistré dans une mémoire de la centrale de commande 6 et est exécutable par le calculateur électronique de la centrale de commande 6.

Par exemple, les ordres de mouvement Om sont des instructions de type « MOVE » exprimées dans un langage de programmation approprié. Les instructions du programme 100 sont exécutées pas à pas par la centrale de commande 6.

De façon alternative et/ou complémentaire, les ordres de mouvement Om peuvent être transmis à la centrale de commande 6 directement par un opérateur, au moyen d'un boîtier de commande manuelle 102 nommé « teach pendant ». Ce boîtier de commande manuelle 102 permet à l'opérateur de déplacer le bras de robot 4 en saisissant directement des positions particulières.

La centrale de commande 6 comporte en outre un générateur de trajectoire 104, par exemple implémenté sous forme logicielle et mis en œuvre au moyen du calculateur électronique et au moyen d'instructions exécutables enregistrées dans les mémoires de la centrale de commande 6.

Le générateur de trajectoire 104 est configuré pour générer automatiquement à chaque cycle de fonctionnement, des consignes de position articulaires devant être prises pour chacun des axes A1 à A6, à partir des ordres de mouvement Om reçus.

Pour ce faire, le générateur de trajectoire 104 s'appuie sur un modèle cinématique inverse théorique 106 du bras de robot 4.

De façon connue, un modèle cinématique « direct » du bras de robot 4 permet de calculer des déplacements du bras de robot 4 exprimés sous forme de coordonnées cartésiennes à partir des déplacements articulaires pour chacun des axes A1 à A6, ici des valeurs de rotation autour des axes A1 à A6.

Ce modèle cinématique est fonction de paramètres géométriques du bras de robot 4 et également du type et de la configuration des articulations du bras de robot 4. Au sens de la présente description, un modèle est dit « théorique », ou « nominal », lorsqu'il est paramétré par des paramètres géométriques théoriques, correspondant à un bras de robot idéal.

Un modèle cinématique est dit « réel », lorsqu'il est paramétré par des paramètres géométriques réels du bras de robot 4, issus de mesures des propriétés physiques du bras de robot 4. En effet, le bras de robot 4 présente un écart plus ou moins important par rapport au bras de robot idéal, du fait de variabilités inhérentes à son processus de fabrication.

Le modèle cinématique dit « inverse » permet de calculer, de façon correspondante, des déplacements articulaires pour chacun des axes A1 à A6 à partir des déplacements du bras de robot 4 exprimés sous forme de coordonnées cartésiennes. Il correspond ainsi à une inversion mathématique du modèle cinématique dit « direct ».

Dans cet exemple, le modèle cinématique inverse théorique 106 est simple du fait de la nature unique des articulations et de leur configuration. Les articulations sont toutes des liaisons pivot. Les axes A2 et A3 sont parallèles. Les axes A4, A5 et A6 sont concourants. Les calculs d'inversion sont alors réalisables au moyen de méthodes analytiques, comme la méthode dite de « Paul », décrite dans l'ouvrage de Richard P. Paul « Robot Manipulators : Mathematics, Programming and Control », MIT Press, 1981.

Ainsi, grâce au modèle cinématique inverse théorique 106, le générateur de trajectoire 104 assure le calcul de consignes articulaires nominales ou théoriques, notées CN, pour chaque axe d'articulation A1 à A6.

Au sens de la présente description, par « consigne articulaire », on désigne une valeur de consigne de position articulaire pour un axe d'articulation donné du bras de robot 4. Dans cet exemple, ces consignes articulaires sont des valeurs d'angles de rotation autour de l'axe d'articulation correspondant.

En raison des écarts géométriques entre le bras de robot réel 4 et le bras de robot idéal sur lequel le modèle cinématique théorique inverse est basé, ces consignes articulaires théoriques CN doivent être corrigées pour que la trajectoire du bras de robot 4 corresponde à celle définie par les ordres de mouvement Om.

L'unité de calcul 11 est quant à elle programmée, par exemple au moyen d'instructions exécutables enregistrées dans les mémoires du contrôleur de robot 10, pour déterminer la correction de consigne d'articulation à appliquer, de manière à déterminer des consignes articulaires effectives CAE.

Pour ce faire, l'unité de calcul 11 s'appuie d'abord sur le modèle cinématique direct théorique 108 pour recalculer les consignes cartésiennes CC de positionnement et s'appuie également sur le modèle cinématique inverse réel, noté 110, utilisant des paramètres géométriques réels.

Les paramètres géométriques réels du bras de robot 4 sont par exemple stockés dans une mémoire du contrôleur de robot 10. Ils peuvent provenir de la mise en œuvre préalable d'un procédé de calibration du bras de robot 4.

Le modèle cinématique inverse réel 110 permet de calculer, grâce aux paramètres géométriques réels, des consignes articulaires réelles à partir des consignes cartésiennes.

Par « consignes articulaires réelles », on désigne ici les valeurs de déplacement qui seraient atteintes pour les axes d'articulation en tenant compte des écarts du bras de robot 4 par rapport au bras de robot idéal.

Plus précisément, l'unité de calcul 11 est programmée pour calculer les consignes articulaires réelles et pour les comparer aux consignes articulaires nominales CN, et pour définir une valeur de correction de consigne articulaire CORR à ajouter aux consignes articulaires nominales CN afin d'obtenir des consignes articulaires effectives, notées CAE. Ce programme apparaît sous la référence 111 sur le schéma synoptique de la figure 2.

Avantageusement, l'unité de calcul 11 comporte optionnellement un filtre ou module de filtrage, non illustré, par exemple implémenté par des instructions exécutables ou par un processeur de traitement du signal dédié, dit DSP. Le module de filtrage est configuré pour filtrer le signal, analogique ou numérique, représentatif des valeurs de correction de consigne articulaire CORR calculées.

De préférence, le module de filtrage comporte un filtre passe-bas, pour éliminer les composantes fréquentielles du signal qui correspondent à des modes d'excitation propres du bras de robot 4. Cela permet d'éviter que les fréquences propres du bras de robot ne soient excitées.

Par exemple, le filtre comporte un filtre dit boxcar, c'est-à-dire dont la fonction de transfert est une fonction boxcar connue aussi sous le nom de « fonction porte ». De tels filtres permettent d'obtenir une réponse impulsionnelle finie et sont simples à implémenter.

A titre d'exemple illustratif, on utilise ici trois filtres boxcar identiques appliqués en série, chaque filtre étant défini par une fonction porte d'une durée de 100ms. Cela permet d'assurer la continuité des accélérations lors du déplacement du bras de robot 4.

L'unité de calcul 11 contient également un modèle cinématique des transmissions, noté 112, pour calculer des consignes de commande moteur CCM à partir des consignes articulaires effectives CAE.

De façon connue, le modèle cinématique des transmissions permet de modéliser les rapports de réductions et d'éventuels couplages entre différents axes d'articulation, ces derniers tenant compte du fait qu'une consigne articulaire peut solliciter plusieurs moteurs M1 à M6. Dans notre exemple, le modèle cinématique des transmissions 112 tient compte du couplage des axes A5 et A6.

En outre, l'unité de calcul 11 est également programmée pour permettre la remontée d'informations de position provenant des capteurs 8 du bras de robot 4.

A cet effet, l'unité de calcul 11 comporte et implémente un modèle cinématique inverse des transmissions, noté 120, et un module 122 d'application des valeurs de correction CORR. A partir de ce modèle 120, l'unité de calcul 11 est configurée pour calculer des positions articulaires effectives PAE en fonction des positions effectives PME mesurées par les capteurs 8 du bras de robot 4.

Le module 122 permet quant à lui de calculer des positions articulaires nominales PAN à partir des positions articulaires effectives PAE en fonction des valeurs de corrections de consigne articulaire CORR.

De façon analogue, la centrale de commande 6 est programmée pour calculer des positions cartésiennes PC à partir des positions articulaires nominales PAN au moyen du modèle cinématique direct théorique 124.

Ainsi, les valeurs de position mesurées peuvent être remontées vers la centrale de commande 6 en étant corrigées de façon transparente pour l'exécution du programme 100.

Les contrôleurs de moteur C1 à C6 sont chacun adapté pour générer, à partir des consignes de commande moteur CCM, des courants électriques d'alimentation, ou consignes de courant, notées ID, pour piloter les moteurs M1 à M6. Par exemple, les contrôleurs de moteur C1 à C6 comportent des cartes électroniques logées dans le contrôleur de robot 10 et contenant chacune un calculateur électronique.

La génération des consignes de courant ID par chacun des contrôleurs de moteur C1 à C6 est réalisée en fonction des consignes de commande moteur CCM correspondantes reçues de l'unité de calcul 11 et s'accompagne d'une régulation en courant effectuée au moyen de boucles d'asservissement à partir de données de position mesurées par le capteur 8 correspondant. Dans cet exemple, chaque contrôleur de moteur C1 à C6 comporte une boucle d'asservissement 114 en position et en vitesse et une boucle d'asservissement en courant 116.

A la figure 2, les contrôleurs de moteur C1 à C6 sont désignés par la référence générique Ci et les moteurs M1 à M6 sont désignés par la référence générique Mi, où « i » est un entier compris entre 1 et 6.

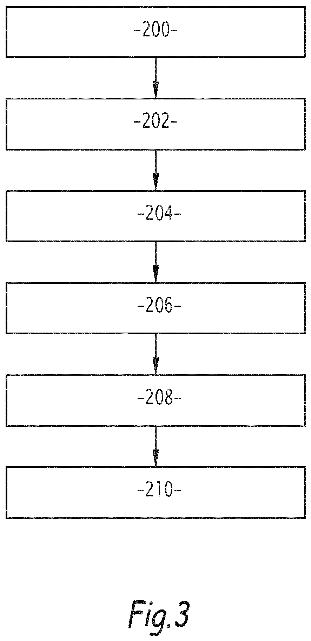

Un exemple de fonctionnement de la cellule 2 est maintenant décrit en référence aux figures 3, 4 et 5.

Ce procédé est ici mis en œuvre conjointement par le calculateur électronique de la centrale de commande 6 et par l'unité de calcul 11, par exemple en exécutant des instructions exécutables dédiées contenues dans les mémoires informatiques respectives de la centrale de commande 6 et du contrôleur de robot 10.

D'abord, lors d'une étape 200, un ou plusieurs ordres de mouvement Om sont fournis à la centrale de commande 6. Par exemple, la centrale de commande 6 exécute un programme de commande du robot, préalablement fourni, pour générer une succession d'ordres de mouvement Om correspondants pour le déplacement pas à pas du bras de robot 4 et, éventuellement, pour piloter les moteurs M7 et M8 commandant les équipements additionnels de la centrale 2.

Alternativement et/ou de façon complémentaire, ces ordres de mouvement Om sont fournis au moyen du boîtier de commande manuelle 102. Par exemple, ces ordres de mouvement Om définissent des positions que le bras de robot 4 doit prendre.

Ensuite, lors d'une étape 202, une trajectoire est générée par le générateur de trajectoire 104, en calculant des consignes articulaires nominales CN à partir d'ordres de mouvement Om.

A l'issue de l'étape 202, on dispose d'un ensemble de consignes articulaires nominales CN, associées aux différents axes d'articulation A1 à A6. A ce stade, les consignes CN sont basées sur les paramètres théoriques du bras de robot 4 et ne tiennent pas compte de la géométrie réelle du bras de robot 4.

Lors d'une étape 204, les consignes nominales CN sont transmises vers l'unité de calcul 11 du contrôleur de robot 10 par le bus de communication 5.

Par exemple, pour chaque cycle de communications, un télégramme de données est envoyé par la centrale de commande 6 sur le bus de communication 5, ce télégramme contenant les valeurs des consignes articulaires nominales CN pour chacun des axes d'articulation A1 à A6 calculées pour ce cycle de communication. Ce télégramme est alors reçu par la carte de communication 12, qui transmet les valeurs correspondantes à l'unité de calcul 11, sous la forme de signaux appropriés, au travers du bus interne du contrôleur de robot 10.

Puis, lors d'une étape 206, ici mise en œuvre par l'unité de calcul 11, des consignes articulaires effectives CAE sont calculées à partir des consignes nominales CN, pour tenir compte des paramètres géométriques réels du bras de robot et de leur écart par rapport aux paramètres géométriques théoriques.

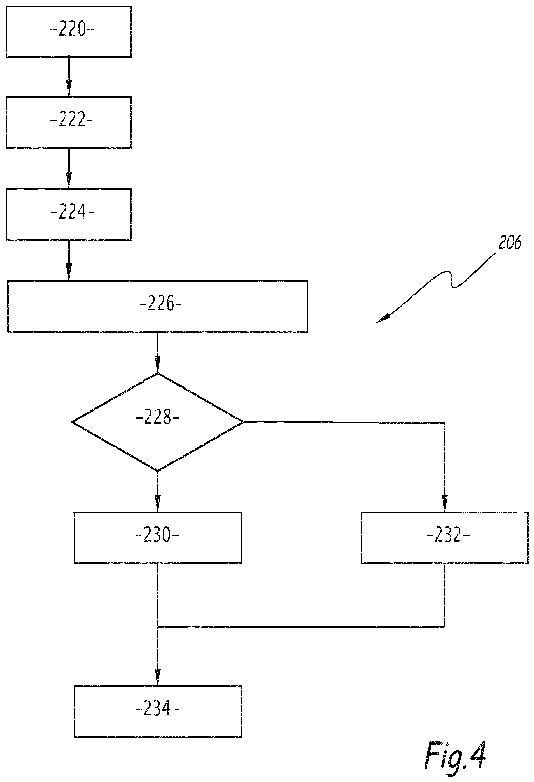

Comme illustré à la figure 4, cette étape 206 comporte d'abord une opération 220 d'acquisition des consignes nominales CN.

Lors d'une opération 222, les consignes cartésiennes CC sont calculées à partir du modèle cinématique direct théorique 108 en utilisant les paramètres théoriques.

Lors d'une opération 224, les consignes articulaires réelles sont calculées à partir des consignes cartésiennes CC. Ce calcul est réalisé en utilisant le modèle cinématique inverse réel 110 associé aux paramètres géométriques réels du bras de robot 4. Il est plus complexe car les simplifications issues du type de bras et de la prise en compte d'une géométrie parfaite ne sont plus applicables. En effet, les paramètres géométriques réels peuvent traduire le fait que deux axes théoriquement parallèles ne le sont pas en réalité. L'inversion ne peut plus se faire analytiquement mais requiert la mise en œuvre de méthodes de résolution numériques comme par exemple les méthodes de Newton. Puis, lors d'une opération 226, pour chaque axe A1 à A6, la valeur absolue de la différence entre la consigne articulaire réelle et la consigne articulaire nominale CN est calculée.

Cette valeur absolue est ensuite comparée à un seuil prédéfini au cours d'une opération 228.

Si la valeur absolue est strictement supérieure au seuil prédéfini, alors, lors d'une opération 230, la valeur de correction de consigne articulaire CORR est choisie égale à zéro.

Au contraire, si la valeur absolue est inférieure ou égale au seuil prédéfini, alors, lors d'une opération alternative 232, la valeur de correction de consigne articulaire CORR est choisie égale à la valeur de la différence entre la consigne articulaire réelle et la consigne articulaire nominale CN.

Le calcul des valeurs de correction de consigne articulaire CORR basé sur la comparaison avec la valeur seuil permet d'éviter que des corrections excessivement élevées ne soient mises en œuvre pour des configurations singulières du bras de robot 4. En choisissant le seuil prédéfini équivalent à 1 degré de déplacement angulaire de l'axe ou équivalent à 1mm de déplacement linéaire dans le cas d'un axe d'articulation de type glissière, le passage des configurations singulières, qui génère des différences importantes entre les consignes articulaires nominales et les consignes articulaires réelles, est satisfaisant.

Toutefois, selon une variante, la comparaison au seuil prédéfini est omise et la valeur de correction de consigne articulaire CORR est systématiquement choisie égale à la valeur de la différence calculée. Alors, les opérations 228, 230 sont omises et l'opération 232 est directement mise en œuvre après l'opération 226.

Avantageusement, lors des opérations 230 et 232, la valeur de correction de consigne articulaire CORR calculée est filtrée par l'unité de calcul 11 au moyen du module de filtrage, comme précédemment expliqué. En particulier, lors du passage des configurations singulières, le filtrage permet le lissage des discontinuités générées par la mise en œuvre du seuil de correction.

Enfin, lors d'une opération 234, chaque valeur de correction de consigne articulaire CORR calculée est ajoutée à la valeur de consigne articulaire nominale correspondante CN, pour obtenir les valeurs de consignes articulaires effectives CAE correspondantes.

En d'autres termes, la consigne articulaire effective CAE est ici la somme de la consigne articulaire nominale CN et de la valeur de correction de consigne articulaire CORR.

A l'issue de l'étape 206, on dispose donc des consignes articulaires effectives CAE pour chacun des axes d'articulation A1 à A6 pour le cycle de communication correspondant.

Comme illustré à la figure 3, lors d'une étape 208, les consignes de commande moteur CCM pour chaque moteur M1 à M6 sont alors calculées à partir des consignes articulaires effectives CAE par l'unité de calcul 11, au moyen du modèle cinématique des transmissions 112. Ces consignes CCM sont ensuite transmises aux contrôleurs de moteur Ci correspondants, par exemple au moyen de liaisons câblées.

Puis, lors d'une étape 210, les consignes de courant ID sont calculées par chacun des contrôleurs de moteur Ci, à partir des consignes de commande moteur CCM reçues. Les consignes de courant correspondent à des courants électriques qui alimentent des enroulements des moteurs M1 à M6. L'étape 210 est ici mise en œuvre par les contrôleurs de moteur Ci respectifs.

Les moteurs Mi déplacent alors les segments du bras de robot 4 selon les axes d'articulation correspondants, pour atteindre les positions effectives commandées. Par exemple, l'outil 40 est alors amené à la position et l'orientation désirées définies par les ordres de mouvement Om.

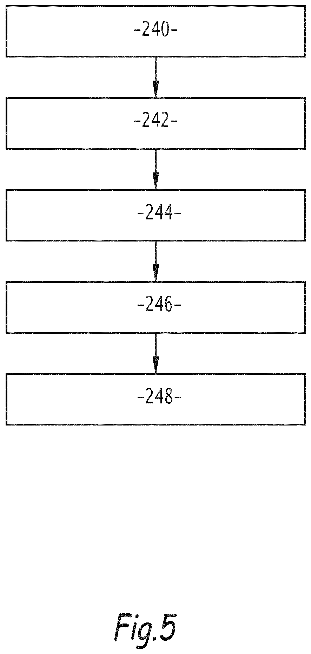

En parallèle, comme illustré à la figure 5, les positions effectives du bras de robot 4 sont mesurées à partir des capteurs 8, puis les positions cartésiennes correspondantes sont déterminées.

Ainsi, lors d'une étape 240, chaque capteur 8 du bras de robot 4 mesure la position effective PME du moteur M1 à M6 auquel il est associé.

Avantageusement, lors de l'étape 210, les contrôleurs Ci respectifs tiennent compte, lors du calcul des consignes de courant ID, de ces positions effectives PME ainsi mesurées, dans le but d'assurer une régulation en courant. Ces positions effectives PME sont également transmises à l'unité de calcul 11.

Lors d'une étape suivante 242, les positions articulaires effectives PAE sont calculées par l'unité de calcul 11 à partir des positions effectives PME des moteurs, au moyen du modèle cinématique inverse des transmissions 120.

Puis, lors d'une étape 244, les positions articulaires nominales PAN sont calculées à partir des positions effectives PAE, en appliquant, au moyen du module 122, les valeurs de corrections de consigne articulaire CORR correspondantes calculées lors de l'étape 206 pour le cycle de communication correspondant.

Plus précisément, cette correction est appliquée ici en retranchant, aux positions articulaires effectives PAE, les corrections de consigne articulaire CORR appliquées sur les consignes articulaires nominales CN correspondantes.

Ensuite, lors d'une étape 246, les positions articulaires nominales PAN ainsi calculées sont transmises à la centrale de commande 6, et plus précisément, à son calculateur électronique. Par exemple, la carte 12 renvoie sur le bus de communication 5 et à destination de la centrale de commande 6 le télégramme précédemment reçu lors de ce cycle de communication, après y avoir ajouté les valeurs des positions articulaires nominales PAN calculées par l'unité de calcul 11.

Puis, avantageusement, lors d'une étape 248, les positions cartésiennes PC correspondant aux positions articulaires nominales PAN sont calculées par la centrale de commande 6. Ce calcul est effectué au moyen du modèle cinématique direct théorique 124.

Les positions cartésiennes PC ainsi calculées sont, par exemple, utilisées par le calculateur électronique lorsqu'il exécute le programme 100, par exemple parce qu'une séquence contenue dans ce programme nécessite de vérifier que le bras de robot 4 s'est déplacé conformément à l'ordre de mouvement Om correspondant. Le calculateur électronique de la centrale de commande 6 est ici de type multitâche, de sorte à pouvoir calculer les coordonnées cartésiennes PC parallèlement à l'exécution du programme 100.

Les positions cartésiennes PC peuvent également, le cas échéant, être transmises au boîtier de commande manuelle 102 pour que l'opérateur puisse vérifier la bonne exécution du déplacement demandé.

En pratique, toutefois, du fait du retard introduit par la chaîne de mesure, les valeurs de position transmises à la centrale de commande 6 pour un cycle de communication peuvent correspondre à un déplacement du bras de robot 4 résultant de l'application de consignes articulaires émises lors d'un cycle de communication antérieur.

Les étapes 202 à 248 sont ici répétées au cours du temps, par exemple itérées pour chacun des cycles de communication successifs entre la centrale de commande 6 et le contrôleur de robot 10 jusqu'à ce que la trajectoire du bras de robot 4 soit complète.

Grâce à l'invention, l'élaboration du programme de commande qui est fourni à la centrale de commande 6 ne nécessite pas de connaissance préalable des valeurs de correction CORR ni des paramètres géométriques réels. Les paramètres géométriques réels du bras de robot 4 sont stockés dans le contrôleur de robot 10 et sont utilisés par le modèle cinématique inverse réel 110 pour la correction des consignes articulaires lors de l'exécution du programme.

Ainsi, pour élaborer le programme de commande, il peut être considéré que le bras de robot est un bras de robot parfait, dont les propriétés géométriques sont fidèlement représentées par le modèle cinématique inverse théorique. Il n'est pas nécessaire, contrairement aux procédés connus, de prendre en compte les paramètres réels du bras de robot au moment de l'élaboration du programme de commande.

En d'autres termes, la prise en compte de la géométrie réelle du bras de robot est réalisée par le contrôleur de robot 10 et non pas par la centrale de commande 6.

L'élaboration du programme de commande de la cellule de travail 2 est donc grandement simplifiée. De fait, ce programme peut être mis en œuvre sur différentes cellules de travail sans avoir besoin de tenir compte des écarts de leurs bras de robot respectifs par rapport au bras de robot parfait.

L'invention n'exclut pas que la centrale de commande mette en œuvre un modèle cinématique inverse théorique analogue à celui qui est appliqué par l'unité de calcul. Ce modèle cinématique inverse théorique s'appuie néanmoins sur des paramètres géométriques théoriques différents des paramètres géométriques réels. Par exemple, le modèle cinématique inverse théorique peut reprendre le formalisme de Denavit-Hartenberg et exiger une résolution numérique de l'inversion.

Les modes de réalisation et les variantes envisagés ci-dessus peuvent être combinés entre eux pour générer de nouveaux modes de réalisation.

## Revendications

1. Procédé de commande d'une cellule de travail (2) automatisée, cette cellule de travail (2) comprenant :
- un bras de robot (4) articulé à au moins trois degrés de liberté, ce bras de robot (4) étant pilotable suivant des consignes articulaires et comportant des moteurs (M1, M2, M3, M4, M5, M6) adaptés pour manœuvrer des parties du bras de robot;
- une centrale de commande (6), apte à commander le fonctionnement de la cellule de travail (2) à partir d'ordres de mouvement (Om) ;
- un contrôleur de robot (10), incluant des contrôleurs de moteur (C1, C2, C3, C4, C5, C6) pilotant chacun le fonctionnement d'un moteur ;
- un bus de communication (5) entre la centrale de commande (6) et le contrôleur de robot (10) ;
ce procédé de commande comportant des étapes consistant à :
y) calculer (202), par la centrale de commande (6), des consignes articulaires nominales (CN) à l'aide d'un générateur de trajectoire (104), à partir des ordres de mouvement (Om);
z) transmettre (204), à travers le bus de communication (5), les consignes articulaires nominales (CN) calculées vers une unité de calcul (11) appartenant au contrôleur de robot (10) ;
ce procédé de commande étant **caractérisé en ce qu'**il comporte des étapes consistant à :
a) calculer, par l'unité de calcul (11), des consignes cartésiennes (CC) correspondant aux consignes articulaires nominales (CN) ;
b) calculer, par l'unité de calcul (11), des consignes articulaires réelles, à partir des consignes cartésiennes (CC), en prenant en compte des paramètres géométriques réels du bras de robot (4) ;
c) calculer, pour chaque consigne articulaire nominale (CN) et à partir de la consigne articulaire réelle, une valeur de correction de consigne articulaire (CORR);
d) calculer pour chaque consigne articulaire nominale (CN) et à partir de la correction de consigne articulaire (CORR) établie, une consigne articulaire effective (CAE), la consigne articulaire effective (CAE) étant la somme de la consigne articulaire nominale (CN) et de la correction de consigne articulaire (CORR) ;
e) calculer (208) des consignes de commande (CCM) pour chaque contrôleur de moteur à partir des consignes articulaires effectives (CAE) calculées ;
f) transmettre les consignes de commande moteur (CCM) vers chaque contrôleur de moteur (C1, C2, C3, C4, C5, C6) pour piloter le moteur correspondant selon la consigne de commande moteur.

2. Procédé selon la revendication 1, **caractérisé en ce que** lors de l'étape c) la valeur de correction de consigne articulaire est choisie (230) égale à zéro si la valeur absolue de la différence entre la consigne articulaire réelle et la consigne articulaire nominale (CN) est supérieure à un seuil prédéfini, la valeur de correction de consigne articulaire est choisie (232) égale à la différence entre la consigne articulaire réelle et la consigne articulaire nominale (CN) dans le cas contraire.

3. Procédé selon la revendication 1, **caractérisé en ce que** lors de l'étape c), la valeur de correction de consigne articulaire est choisie (232) égale à la différence entre la consigne articulaire réelle et la consigne articulaire nominale (CN).

4. Procédé selon l'une quelconque des revendications précédentes, **caractérisé en ce qu'**à l'étape c) un filtre passe-bas est appliqué par l'unité de calcul (11) à la valeur de correction de consigne articulaire (CORR) calculée.

5. Procédé selon la revendication 4, **caractérisé en ce que** le filtre appliqué est un filtre passe-bas à réponse impulsionnelle finie.

6. Procédé selon la revendication 5, **caractérisé en ce que** le filtre comporte trois filtres boxcar appliqués en série.

7. Procédé selon l'une quelconque des revendications précédentes, **caractérisé en ce que** le procédé comporte également des étapes consistant à :
g) transmettre (240) à destination de l'unité de calcul (11), la position effective (PME) du moteur (M1, M2, M3, M4, M5, M6) piloté par ce contrôleur ;
h) calculer (242), par l'unité de calcul (11) et à partir des positions effectives des moteurs (PME), des positions articulaires effectives (PAE) du bras de robot (4) ;
i) calculer (244), par l'unité de calcul (11), des positions articulaires nominales (PAN) du bras de robot (4), en retranchant à chaque position articulaire effective (PAE) la valeur de correction de consigne articulaire (CORR) de consignes articulaires calculée pour la consigne articulaire nominale (CN) correspondante ;
j) transmettre (246) à la centrale de commande (6) les positions articulaires nominales (PAN) calculées lors de l'étape i).

8. Procédé selon l'une quelconque des revendications précédentes, **caractérisé en ce que** lors de l'étape y), les ordres de mouvement (Om) définissent des positions et des orientations du bras de robot (4) exprimées dans un repère cartésien et la centrale de commande (6) met en œuvre un modèle cinématique inverse théorique (106) en prenant en compte des paramètres géométriques théoriques du bras de robot (4).

9. Procédé selon la revendication 8, **caractérisé en ce que** lors de l'étape y), les consignes articulaires nominales (CN) sont calculées à partir d'un modèle cinématique inverse théorique (108) du bras de robot (4) paramétré par des paramètres géométriques théoriques du bras de robot (4) et **en ce que** lors de l'étape b), les consignes articulaires réelles sont calculées à partir d'un modèle cinématique inverse réel (110) analogue, paramétré par des paramètres géométriques réels du bras de robot (4).

10. Cellule de travail (2) automatisée comprenant :
- un bras de robot (4) articulé à au moins trois degrés de liberté, ce bras de robot (4) étant pilotable suivant des consignes articulaires et comportant des moteurs (M1, M2, M3, M4, M5, M6) adaptés pour manœuvrer des parties du bras de robot;
- une centrale de commande (6), apte à commander le fonctionnement de la cellule de travail (2) à partir d'ordres de mouvement (Om) ;
- un contrôleur de robot (10), incluant des contrôleurs de moteur (C1, C2, C3, C4, C5, C6) pilotant chacun le fonctionnement d'un moteur ;
- un bus de communication (5) entre la centrale de commande (6) et le contrôleur de robot (10) ;
la cellule de travail (2) étant programmée pour mettre en œuvre des étapes consistant à :
y) calculer (202), par la centrale de commande (6), des consignes articulaires nominales (CN) à l'aide d'un générateur de trajectoire (104), à partir des ordres de mouvement (Om);
z) transmettre (204), à travers le bus de communication (5), les consignes articulaires nominales (CN) calculées vers une unité de calcul (11) appartenant au contrôleur de robot (10) ;
la cellule de travail (2) étant **caractérisée en ce qu'**elle est programmée pour mettre en œuvre des étapes consistant à :
a) calculer, par l'unité de calcul (11), des consignes cartésiennes (CC) correspondant aux consignes articulaires nominales (CN) ;
b) calculer, par l'unité de calcul (11), des consignes articulaires réelles, à partir des consignes cartésiennes (CC), en prenant en compte des paramètres géométriques réels du bras de robot (4) ;
c) calculer, pour chaque consigne articulaire nominale (CN) et à partir de la consigne articulaire réelle, une valeur de correction de consigne articulaire (CORR);
d) calculer, pour chaque consigne articulaire nominale (CN) et à partir de la correction de consigne articulaire (CORR) établie, une consigne articulaire effective (CAE), la consigne articulaire effective (CAE) étant la somme de la consigne articulaire nominale (CN) et de la correction de consigne articulaire (CORR) ;
e) calculer (208) des consignes de commande (CCM) pour chaque contrôleur de moteur à partir des consignes articulaires effectives (CAE) calculées ;
f) transmettre (210) les consignes de commande moteur (CCM) vers chaque contrôleur de moteur (C1, C2, C3, C4, C5, C6) pour piloter le moteur correspondant selon la consigne de commande moteur.

11. Cellule de travail (2) automatisée selon la revendication 10, **caractérisé en ce que** lors de l'étape y), les ordres de mouvement (Om) définissent des positions et des orientations du bras de robot (4) exprimées dans un repère cartésien et la centrale de commande (6) met en œuvre un modèle cinématique inverse théorique (106) en prenant en compte des paramètres géométriques théoriques du bras de robot (4).

12. Cellule de travail (2) automatisée selon la revendication 11, **caractérisé en ce que** lors de l'étape y), les consignes articulaires nominales (CN) sont calculées à partir d'un modèle cinématique inverse théorique (108) du bras de robot (4) paramétré par des paramètres géométriques théoriques du bras de robot (4) et **en ce que** lors de l'étape b), les consignes articulaires réelles sont calculées à partir d'un modèle cinématique inverse réel (110) analogue, paramétré par des paramètres géométriques réels du bras de robot (4).

13. Cellule de travail (2) automatisée selon l'une quelconque des revendications 10, 11 et 12, **caractérisée en ce qu'**elle comporte des mémoires informatiques contenant des instructions informatiques exécutables adaptées pour mettre en œuvre les étapes y), z) et a) à f).

## Patentansprüche

1. Verfahren zum Steuern einer automatisierten Arbeitsstation (2), wobei diese Arbeitsstation (2) umfasst:
- einen Roboterarm (4), der mit mindestens drei Freiheitsgraden gelenkig ausgebildet ist, wobei dieser Roboterarm (4) gemäß Gelenksollwerten steuerbar ist und Motoren (M1, M2, M3, M4, M5, M6) aufweist, die zum Betätigen der Teile des Roboterarms geeignet sind;
- eine Steuerzentrale (6), die geeignet ist, die Funktionsweise der Arbeitsstation (2) mithilfe von Bewegungsbefehlen (Om) zu steuern;
- eine Steuervorrichtung (10) des Roboters, die Motorsteuerungen (C1, C2, C3, C4, C5, C6) einschließt, die jeweils die Funktionsweise eines Motors steuern;
- einen Kommunikationsbus (5) zwischen der Steuerzentrale (6) und der Steuervorrichtung (10) des Roboters;
wobei das Steuerverfahren Schritte aufweist, bestehend aus:
y) Berechnen (202) durch die Steuerzentrale (6) von Nominal-Gelenksollwerten (CN) mithilfe eines Laufbahngenerators (104) aus den Bewegungsbefehlen (Om);
z) Übertragen (204) der berechneten Nominal-Gelenksollwerte (CN) über den Kommunikationsbus (5) zu einer Recheneinheit (11), die zu der Steuervorrichtung (10) des Roboters gehört;
wobei dieses Steuerverfahren **dadurch gekennzeichnet ist, dass** es die Schritte aufweist, bestehend aus:
a) Berechnen von kartesischen Sollwerten (CC) entsprechend den Nominal-Gelenksollwerten (CN) durch die Recheneinheit (11);
b) Berechnen von realen Gelenksollwerten aus den kartesischen Sollwerten (CC) durch die Recheneinheit (11), wobei reale geometrische Parameter des Roboterarms (4) berücksichtigt werden;
c) Berechnen für jeden Nominal-Gelenksollwert (CN) aus den realen Gelenksollwerten eines Korrekturwertes (CORR) für den Gelenksollwert;
d) Berechnen für jeden Nominal-Gelenksollwert (CN) und aus dem festgestellten Korrekturwert (CORR) für den Gelenksollwert eines Effektiv-Gelenkssollwertes (CAE), wobei der Effektiv-Gelenksollwert (CAE) die Summe des Nominal-Gelenksollwertes (CN) und der Korrektur (CORR) des Gelenksollwertes ist;
e) Berechnen (208) von Steuersollwerten (CCM) für jede Motorsteuerung aus den berechneten Effektiv-Gelenksollwerten (CAE);
f) Übertragen der Motor-Steuersollwerte an jede Motorsteuerung (C1, C2, C3, C4, C5, C6) zum Steuern des entsprechenden Motors gemäß dem Motor-Steuersollwert.

2. Verfahren nach Anspruch 1, **dadurch gekennzeichnet, dass** bei dem Schritt c) der Korrekturwert für den Gelenksollwert gleich Null gewählt wird (230), wenn der Absolutwert der Differenz zwischen dem realen Gelenksollwert und dem Nominal-Gelenksollwert (CN) größer als eine vordefinierte Schwelle ist, wobei der Korrekturwert für den Gelenksollwert im gegenteiligen Fall gleich der Differenz zwischen dem realen Gelenksollwert und dem Nominal-Gelenksollwert (CN) gewählt wird (232).

3. Verfahren nach Anspruch 1, **dadurch gekennzeichnet, dass** bei dem Schritt c) der Korrekturwert für den Gelenksollwert gleich der Differenz zwischen dem realen Gelenksollwert und dem Nominal-Gelenksollwert (CN) gewählt wird.

4. Verfahren nach einem beliebigen der vorhergehenden Ansprüche, **dadurch gekennzeichnet, dass** bei dem Schritt c) ein Tiefpassfilter durch die Recheneinheit (11) auf den berechneten Korrekturwert (CORR) für den Gelenksollwert aufgebracht wird.

5. Verfahren nach Anspruch 4, **dadurch gekennzeichnet, dass** das aufgebrachte Filter ein Filter mit endlicher Impulsantwort ist.

6. Verfahren nach Anspruch 5, **dadurch gekennzeichnet, dass** das Filter drei Boxcar Filter aufweist, die in Reihe vorgesehen sind.

7. Verfahren nach einem beliebigen der vorhergehenden Ansprüche, **dadurch gekennzeichnet, dass** das Verfahren gleichfalls Schritte aufweist, bestehend aus:
g) Übertragen (42) der effektiven Position (PME) des von dieser Steuerung gesteuerten Motors (M1, M2, M3, M4, M5, M6) an die Recheneinheit (11);
h) Berechnen (242) von effektiven Gelenkpositionen (PAE) des Roboterarms (4) durch die Recheneinheit (11) und mithilfe der effektiven Positionen der Motoren (PME);
i) Berechnen (244) von nominalen Gelenkpositionen (PAN) des Roboterarms (4) durch die Recheneinheit (11), indem von jeder berechneten effektiven Gelenkposition (PAN) der Korrekturwert (CORR) für den Gelenksollwert von Gelenksollwerten für den entsprechenden Nominal-Gelenksollwert (CN) subtrahiert wird;
j) Übertragen (246) der bei dem Schritt i) berechneten nominalen Gelenkpositionen (PAN) an die Steuerzentrale (6).

8. Verfahren nach einem beliebigen der vorhergehenden Ansprüche, **dadurch gekennzeichnet, dass** bei dem Schritt y) die Bewegungsbefehle (Om) Positionen und Orientierungen des Roboterarms (4) definieren, die in einem kartesischen Koordinatensystem ausgedrückt sind, und die Steuerzentrale (6) ein theoretisches inverses kinematisches Modell (106) durchführt, wobei theoretische geometrische Parameter des Roboterarms (4) berücksichtigt werden.

9. Verfahren nach Anspruch 8, **dadurch gekennzeichnet, dass** bei dem Schritt y) die Nominal-Gelenksollwerte (CN) mithilfe eines theoretischen inversen kinematischen Modells (108) des Roboterarms (4) berechnet werden, das durch theoretische geometrische Parameter des Roboterarms (4) parametriert ist, und dass bei dem Schritt b) die realen Gelenksollwerte aus einem analogen realen inversen kinematischen Modell (110) berechnet werden, das durch reale geometrische Parameter des Roboterarms (4) parametrisiert ist.

10. Automatisierte Arbeitsstation (2), umfassend:
- einen Roboterarm (4), der mit mindestens drei Freiheitsgraden gelenkig ausgebildet ist, wobei dieser Roboterarm gemäß Gelenksollwerten steuerbar ist und Motoren (M1, M2, M3, M4, M5, M6) aufweist, die zum Betätigen der Teile des Roboterarms geeignet sind;
- eine Steuerzentrale (6), die geeignet ist, die Funktionsweise der Arbeitsstation (2) mithilfe von Bewegungsbefehlen (Om) zu steuern;
- eine Steuervorrichtung (10) des Roboters, die Motorsteuerungen (C1, C2, C3, C4, C5, C6) einschließt, die jeweils die Funktionsweise eines Motors steuern;
- einen Kommunikationsbus (5) zwischen der Steuerzentrale (6) und der Steuervorrichtung (10) des Roboters;
wobei die Arbeitsstation (2) zum Durchführen von Schritten programmiert ist, bestehend aus:
y) Berechnen (202) durch die Steuerzentrale (6) von Nominal-Gelenksollwerten (CN) mithilfe eines Laufbahngenerators (104) aus den Bewegungsbefehlen (Om);
z) Übertragen (204) der berechneten Nominal-Gelenksollwerte (CN) über den Kommunikationsbus (5) zu einer Recheneinheit (11), die zu der Steuervorrichtung (10) des Roboters gehört;
wobei die Arbeitsstation (2) **dadurch gekennzeichnet ist, dass** sie zum Durchführen von Schritten programmiert ist, bestehend aus:
a) Berechnen von kartesischen Sollwerten (CC) entsprechend den Nominal-Gelenksollwerten (CN) durch die Recheneinheit (11);
b) Berechnen von realen Gelenksollwerten aus den kartesischen Sollwerten (CC) durch die Recheneinheit (11), wobei reale geometrische Parameter des Roboterarms (4) berücksichtigt werden
c) Berechnen für jeden Nominal-Gelenksollwert (CN) aus den realen Gelenksollwerten eines Korrekturwertes (CORR) für den Gelenksollwert;
d) Berechnen für jeden Nominal-Gelenksollwert (CN) und aus dem festgestellten Korrekturwert (CORR) für den Gelenksollwert eines Effektiv-Gelenkssollwertes (CAE), wobei der Effektiv-Gelenksollwert (CAE) die Summe des Nominal-Gelenksollwertes (CN) und der Korrektur (CORR) des Gelenksollwertes ist;
e) Berechnen (208) von Steuersollwerten (CCM) für jede Motorsteuerung aus den berechneten Effektiv-Gelenksollwerten (CAE);
f) Übertragen der Motor-Steuersollwerte an jede Motorsteuerung (C1, C2, C3, C4, C5, C6) zum Steuern des entsprechenden Motors gemäß dem Motor-Steuersollwert.

11. Automatisierte Arbeitsstation (2) nach Anspruch 10, **dadurch gekennzeichnet, dass** bei dem Schritt y) die Bewegungsbefehle (Om) Positionen und Orientierungen des Roboterarms (4) definieren, die in einem kartesischen Koordinatensystem ausgedrückt sind, und die Steuerzentrale (6) ein theoretisches inverses kinematisches Modell (106) durchführt, wobei theoretische geometrische Parameter des Roboterarms (4) berücksichtigt werden.

12. Automatisierte Arbeitsstation (2) nach Anspruch 11, **dadurch gekennzeichnet, dass** bei dem Schritt y) die Nominal-Gelenksollwerte (CN) mithilfe eines theoretischen inversen kinematischen Modells (108) des Roboterarms (4) berechnet werden, das durch theoretische geometrische Parameter des Roboterarms (4) parametriert ist, und dass bei dem Schritt b) die realen Gelenksollwerte aus einem analogen realen inversen kinematischen Modell (110) berechnet werden, das durch reale geometrische Parameter des Roboterarms (4) parametrisiert ist.

13. Automatisierte Arbeitsstationen (2) nach einem beliebigen der Ansprüche 10, 11 und 12, **dadurch gekennzeichnet, dass** sie Computerspeicher aufweist, die ausführbare Programmbefehle, die geeignet sind, die Schritte y), z) und a) bis f) durchzuführen.

## Claims

1. Method for controlling an automated work cell (2), wherein the work cell (2) comprises:
- a robot arm (4) articulated in at least three degrees of freedom, wherein the robot arm (4) may be controlled according to articular instructions and comprising motors (M1, M2, M3, M4, M5, M6) that are adapted to maneuver parts of the robot arm;
- a control center (6) that is able to control the operation of the work cell (2) by movement commands (Om);
- a robot controller (10), including the motor controllers (C1, C2, C3, C4, C5, C6) wherein each controls the operation of a motor;
- a communication bus (5) between the control center (6) and the robot controller (10);
wherein this control method comprises the steps of:
y) calculating (202), by the control center (6), nominal articular instructions (CN) using a trajectory generator (104), from the movement commands (Om);
z) transmitting (204), via the communication bus (5), the nominal articular instructions (CN) calculated by a calculation unit (11) belonging to the robot controller (10);
wherein this control method is **characterized in that** it comprises steps consisting of:
a) calculating, by the calculation unit (11), Cartesian instructions (CC) corresponding to the nominal articular instructions (CN);
b) calculating, by the calculation unit (11), actual articular instructions from the Cartesian instructions (CC), taking into account actual geometric parameters of the robot arm (4);
c) calculating, for each nominal articular instruction (CN) and from the actual articulation instruction, an articular instruction correction value (CORR);
d) calculation for each nominal articular instruction (CN) and from the established articular correction instruction (CORR), an effective articular instruction (CAE), wherein the effective articular instruction (CAE) is the sum of the nominal articular instruction (CN) and the articular correction instruction (CORR);
e) calculating (208) control commands (CCM) for each motor controller from the calculated effective articulated commands (CAE);
f) transmitting the motor control instructions (CCM) to each motor controller (C1, C2, C3, C4, C5, C6) to control the corresponding motor according to the motor control instruction.

2. Method according to claim 1, **characterized in that** in step c) the articular instruction correction value is chosen (230) to be equal to zero if the absolute value of the difference between the actual articular instruction and the nominal articular instruction (CN) is greater than a predefined threshold, wherein the articular instruction correction value is chosen (232) to be equal to the difference between the actual articular instruction and the nominal articular instruction (CN) in the contrary case.

3. Method according to claim 1, **characterized in that** during step c), the articular instruction correction value is chosen (232) to be equal to the difference between the actual articular instruction and the nominal articular instruction (CN).

4. Method according to any one of the preceding claims, **characterized in that** in step c) a low-pass filter is applied by the calculation unit (11) to the calculated instruction correction value (CORR).

5. A Method according to claim 4, **characterized in that** the filter applied is a finite impulse response low pass filter.

6. Method according to claim 5, **characterized in that** the filter comprises three boxcar filters applied in series.

7. Method according to any one of the preceding claims, **characterized in that** the method also comprises the steps of:
g) transmitting (240) to the calculation unit (11), the actual position (PME) of the motors (M1, M2, M3, M4, M5, M6) controlled by this controller;
h) calculating (242), by the calculation unit (11) and from the actual positions of the motors (PME), effective articular positions (PAE) of the robot arm (4);
i) calculating (244), by the calculation unit (11), nominal articular positions (PAN) of the robot arm (4), subtracting at each effective articular position (PAE) the articular instruction correction value (CORR) of articular instructions calculated for the corresponding nominal articular instruction (CN);
j) transmitting (246) to the control center (6) nominal articulation positions (PAN) calculated in step i).

8. Method according to any one of the preceding claims, **characterized in that** during step y), the movement commands (Om) define positions and orientations of the robot arm (4) expressed in a Cartesian coordinate system, while the control center (6) implements a theoretical inverse kinematic model (106) taking into account theoretical geometrical parameters of the robot arm (4).

9. Method according to claim 8, **characterized in that** during step y), the nominal articular instructions (CN) are calculated from a theoretical inverse kinematic model (108) of the robot arm (4) parameterized by theoretical geometrical parameters of the robot arm (4) and **in that**, during step b), the actual articular instructions are calculated from a similar actual inverse kinematic model (110), parameterized by actual geometrical parameters of the robot arm (4).

10. Automated work cell (2) comprising:
- a robot arm (4) articulated in at least three degrees of freedom, wherein the robot arm (4) may be controlled according to articular instructions and comprising motors (M1, M2, M3, M4, M5, M6) that are adapted to maneuver parts of the robot arm;
- a control center (6), able to control the operation of the work cell (2) from movement commands (Om);
- a robot controller (10), including the motor controllers (C1, C2, C3, C4, C5, C6) wherein each controls the operation of a motor;
- a communication bus (5) between the control center (6) and the robot controller (10);
wherein the work cell (2) is programmed to implement steps of:
y) calculating (202), by the control center (6), nominal articular instructions (CN) using a trajectory generator (104), based on the movement commands (Om);
z) transmitting (204), through the communication bus (5), the nominal articular instructions (CN) calculated to a calculation unit (11) belonging to the robot controller (10);
wherein the work cell (2) is **characterized in that** it is programmed to implement the steps of:
a) calculating, by the calculation unit (11), Cartesian instructions (CC) corresponding to the nominal articular instructions (CN);
b) calculating, by the calculation unit (11), actual articular instructions from the Cartesian instructions (CC), taking into account actual geometric parameters of the robot arm (4);
c) calculating, for each nominal articular instruction (CN) and from the actual articulation instruction, an articular instruction correction value (CORR);
d) calculation for each nominal articular instruction (CN) and from the established articular correction instruction (CORR), an effective articular instruction (CAE), wherein the effective articular instruction (CAE) is the sum of the nominal articular instruction (CN) and the articular correction instruction (CORR);
e) calculating (208) control commands (CCM) for each motor controller from the calculated effective articulated commands (CAE);
f) transmitting the motor control instructions (CCM) to each motor controller (C1, C2, C3, C4, C5, C6) to control the corresponding motor according to the motor control instruction.

11. Automated work cell (2) according to claim 10, **characterized in that** during step y), the movement commands (Om) define positions and orientations of the robot arm (4) expressed in a Cartesian coordinate system, while the control center (6) implements a theoretical inverse kinematic model (106) taking into account theoretical geometrical parameters of the robot arm (4).

12. Automated work cell (2) according to claim 11, **characterized in that** during step y), the nominal articular instructions (CN) are calculated from a theoretical inverse kinematic model (108) of the robot arm (4) parameterized by theoretical geometrical parameters of the robot arm (4) and **in that** in step b), the actual articular instructions are calculated from a similar actual inverse kinematic model (110), parameterized by actual geometrical parameters of the robot arm (4).

13. Automated work cell (2) according to any one of the claims 10, 11 and 12, **characterized in that** it comprises computer memories containing executable computer instructions adapted to implement steps y), z) and a) to f).
